# DEMANDE DE BREVET EUROPEEN

(11) **EP 4 105 065 A1**
(43) Date de publication de la demande: **21.12.2022**
(21) Numéro de dépôt: 22178546.2
(22) Date de dépôt: 11.06.2022
(51) Int. Cl.: B60L 53/30, B60L 53/80, B60L 53/65, B60L 53/66, B60L 53/68, B60S 5/06, B60L 50/60, B60L 58/12, H02J 7/00, B60K 1/04, B60L 58/18

(54) **PROCEDE D'APPROVISIONNEMENT EN ENERGIE D'UNE FLOTTE DE VEHICULES ELECTRIQUES**

(30) Priorité: 14.06.2021 FR 2106261
(71) Demandeur: easyLi, 86360 CHASSENEUIL-DU-POITOU (FR)
(72) Inventeur: BARSACQ, François, 75006 PARIS (FR); MARTIN, Dominique, Jean, Marie, Pierre, 86100 CHATELLERAULT (FR)
(74) Mandataire: Fidal Innovation

(57) **Abrégé**

Un procédé d'approvisionnement en énergie d'une flotte principale réalisant une tâche principale, comprenant une pluralité de véhicules principaux (7), chacun équipé d'un moteur électrique, d'une batterie de traction, et d'un système électronique de charge de celle-ci à partir de batteries auxiliaires (1), comprend les étapes :
a) on fournit un dispositif informatisé distant (4), une pluralité de batteries auxiliaires (1), un dispositif de charge des batteries auxiliaires (1) et une flotte auxiliaire de véhicules de transport (6) de ces batteries (1) ;
b) on charge les batteries auxiliaires (1) ;
c) on transmet au dispositif informatisé (4) des informations sur la tâche principale ;
d) le dispositif informatisé distant (4) calcule une tâche auxiliaire à effectuer par la flotte auxiliaire (6) comprenant {pendant une étape de stationnement prévue d'un véhicule principal (7), lui transmettre une batterie chargée ou en recevoir une batterie auxiliaire (1) déchargée} ;
e) la flotte auxiliaire (6) réalise la tâche auxiliaire.

## Description

### DOMAINE DE L'INVENTION

La présente invention se rapporte à un procédé et à un système d'approvisionnement en énergie d'une flotte de véhicules électriques.

Plus précisément, l'invention se rapporte à un procédé et à un système d'approvisionnement en énergie d'une flotte principale de véhicules électriques dédiée à la réalisation d'une tâche principale au moyen de batteries auxiliaires amovibles et d'une flotte auxiliaire de véhicules de transport de batteries auxiliaires.

### ARRIÈRE-PLAN TECHNOLOGIQUE

Dans le domaine des véhicules électriques, l'autonomie du véhicule est un problème majeur.

D'une part, cette autonomie est en général inférieure à celle du même véhicule équipé d'un moteur thermique et les sites équipés de bornes de recharge ne maillent pas un territoire régional ou national donné de manière suffisante pour que la recharge puisse être effectuée avec certitude si nécessaire sur un trajet quelconque.

D'autre part, la durée de recharge est de l'ordre de quelques heures dans le cas d'un branchement sur une prise domestique du réseau standard ou via un circuit électrique dédié fonctionnant en courant alternatif, là où quelques minutes suffisent pour remplir le réservoir d'un véhicule équipé d'un moteur thermique.

Des bornes de recharge rapide, avec une durée de recharge de l'ordre de la demi-heure, existent, mais encore une fois, elles sont installées dans des stations de recharge dédiées dont la répartition sur le territoire n'est pas pensée pour une flotte spécifique.

La maîtrise de l'approvisionnement d'un véhicule électrique en énergie est donc cruciale pour l'exploitation d'une flotte de véhicules électriques, puisqu'elle conditionne la disponibilité spatiale et temporelle des véhicules de la flotte.

Le document US2012271723A1 est un exemple dans lequel l'autonomie d'un véhicule électrique est accrue au moyen d'une ou plusieurs batteries auxiliaires, qui peuvent transférer de l'énergie électrique à la batterie de traction si nécessaire. Lorsque les batteries auxiliaires sont déchargées, elles peuvent :
- soit être rechargées en place par branchement sur une prise secteur ou une borne de recharge adaptée, la batterie de traction étant rechargée de manière prioritaire,
- soit être remplacées par d'autres batteries auxiliaires déjà chargées.

Dans le second cas, un réseau de distributeurs de batteries auxiliaires est organisé, dont les fonctions sont d'assurer en des lieux fixes la récupération des batteries auxiliaires déchargées, la recharge de ces batteries auxiliaires et la fourniture de batteries auxiliaires chargées. Le conducteur du véhicule électrique se déplace vers le distributeur de son choix pour procéder à l'échange de la (ou des) batterie(s) auxiliaire(s) déchargée(s).

De la même façon, le document GB2570870 décrit un véhicule électrique équipé d'une batterie principale et d'une ou plusieurs batteries auxiliaires. Les batteries auxiliaires permettent de recharger la batterie principale, y compris en roulant. Le conducteur du véhicule peut se procurer des batteries auxiliaires chargées dans des stations d'échanges dédiées.

Toutefois, dans les deux documents précités, le véhicule électrique doit se rendre vers la station d'échange pour se procurer des batteries auxiliaires chargées. Dans le cas d'une flotte de véhicules commerciaux par exemple, la tâche principale à laquelle est dédiée le véhicule peut être le déplacement vers un client ou un lieu d'intervention d'un technicien qui conduit le véhicule, ou encore le déplacement d'un livreur vers un lieu de livraison, mais cette tâche principale n'est naturellement pas de recharger le véhicule. On comprend donc que pour chaque véhicule, une fraction du temps de circulation - et, de manière concomitante, une fraction de la distance parcourue ou encore une fraction du temps de travail du conducteur - est allouée à la gestion de la recharge des batteries auxiliaires plutôt qu'à la tâche principale à laquelle le véhicule est dédiée. L'invention vise ainsi à augmenter le temps de disponibilité des véhicules d'une flotte de véhicules électriques pour la fonction principale à laquelle ces véhicules sont destinés en modifiant les véhicules électriques, si nécessaire, de manière possiblement réversible.

### RÉSUMÉ DE L'INVENTION

Ainsi, l'invention se rapporte à un procédé d'approvisionnement en énergie d'une flotte principale de véhicules électriques dédiée à la réalisation d'une tâche principale, comprenant une pluralité de véhicules principaux, chacun des véhicules principaux :
- étant équipé d'un moteur électrique, d'une batterie de traction, et d'un système électronique de charge de la batterie de traction du véhicule principal à partir d'au moins une batterie auxiliaire dont il peut être équipé de manière amovible,
- effectuant une fraction de la tâche principale sous forme d'une tournée principale comprenant au moins deux étapes de stationnement,
le procédé comprenant les étapes :
a) on fournit un dispositif informatisé distant comportant un processeur et un dispositif de communication à distance, une pluralité de batteries auxiliaires, au moins un dispositif de charge d'au moins une des batteries auxiliaires et une flotte auxiliaire de véhicules comprenant au moins un véhicule de transport de batteries auxiliaires ;
b) on charge au moins une des batteries auxiliaires au moyen de l'au moins un dispositif de charge d'au moins une batterie auxiliaire,
c) on transmet au dispositif informatisé distant des informations comprenant au moins le lieu et la date d'une étape de stationnement prévue de la tâche principale,
d) le processeur du dispositif informatisé distant calcule une tâche auxiliaire à effectuer par la flotte auxiliaire comprenant au moins une action parmi {transmettre à un véhicule principal pendant une étape de stationnement prévue de ce véhicule principal au moins une batterie auxiliaire au moins partiellement chargée, recevoir d'un véhicule principal pendant une étape de stationnement prévue de ce véhicule principal au moins une batterie auxiliaire au moins partiellement déchargée}, et la répartit en une ou plusieurs tournées auxiliaires,
e) au moins un des véhicules de transport de la flotte auxiliaire réalise une des tournées auxiliaires. Grâce à ce procédé, il est possible d'augmenter le temps de disponibilité des véhicules d'une flotte de véhicules électriques pour la fonction principale à laquelle ces véhicules sont destinés, puisque c'est la flotte auxiliaire qui convoie vers les véhicules principaux l'énergie nécessaire à la recharge de leur batterie principale. La flotte auxiliaire apporte l'énergie aux véhicules principaux sous forme de batteries auxiliaires au moins partiellement chargées et peut recevoir de ces véhicules des batteries auxiliaires au moins partiellement déchargées. La flotte auxiliaire évite ainsi notamment aux véhicules principaux d'avoir à se déplacer vers des lieux dédiés à la recharge en énergie. La flotte principale est rendue par ailleurs indépendante de l'existence ou de la disponibilité d'infrastructures de recharge de la batterie de traction dans la zone géographique dans laquelle elle est mise en oeuvre.

A l'inverse des solutions connues de l'art antérieur, la recharge en énergie est effectuée en mettant à profit le caractère « prévue » d'une étape de stationnement parmi les au moins deux étapes de stationnemment. Au moins une des étapes de stationnement peut être prévue, de sorte que l'étape de recharge du véhicule principal pendant cette étape de stationnement n'est pas une étape de stationnement imposée par la recharge mais imposée par la tâche principale. En conséquence, le temps de recharge correspondant ne peut pas être considéré comme du temps perdu pour l'utilisateur du véhicule, ou en d'autres termes pour la réalisation de la tâche principale par le véhicule principal en question.

La présente invention exploite donc des étapes de stationnement nécessaires à l'exécution de la tâche principale pour procéder aux recharges/échanges de batteries, ce qui correspond à une inversion complète de la logique de recharge de la flotte principale par rapport aux documents de l'art antérieur.

Selon un mode de réalisation, le procédé d'approvisionnement en énergie est caractérisé en ce que si à l'étape e, l'action « transmettre à un véhicule principal au moins une batterie auxiliaire au moins partiellement chargée pendant une étape de stationnement prévue de ce véhicule principal » est effectuée, une étape de recharge de la batterie de traction est effectuée après l'étape e comprenant : on recharge la batterie de traction du véhicule principal au moyen du système électronique de charge de la batterie de traction du véhicule principal à partir d'au moins une batterie auxiliaire au moins partiellement chargée.

Grâce à cette disposition, l'énergie apportée par la flotte auxiliaire au véhicule principal sous forme de batteries auxiliaires est transmise à la batterie de traction, qui est ainsi rechargée sans que le véhicule soit dans un lieu équipé pour la recharge directe de cette batterie de traction et sans qu'il soit nécessaire de manipuler la batterie de traction. La batterie de traction, lourde, difficile d'accès et de manipulation, reste donc en place dans le véhicule principal dont le moteur de traction demeure exclusivement alimenté par cette batterie de traction.

Selon un mode de réalisation du procédé d'approvisionnement en énergie, au cours de l'étape a, on fournit au moins une station de charge équipée d'au moins un dispositif de charge d'au moins une des batteries auxiliaires.

Grâce à cette disposition, la recharge des batteries auxiliaires peut être effectuée dans une station de charge dédiée. Il n'est en particulier pas nécessaire de prévoir un dispositif de charge par batterie auxiliaire puisque les batteries auxiliaires passent une partie du temps dans les véhicules principaux.

Selon un mode de réalisation du procédé d'approvisionnement en énergie, au cours de l'étape a, le processeur du dispositif informatisé distant calcule la position d'au moins une station de charge en fonction de la tâche principale.

Grâce à cette disposition, il est possible d'optimiser la répartition des stations de charge dans la zone géographique dans laquelle s'effectue la tâche principale, en particulier si celle-ci présente une certaine périodicité.

Selon un mode de réalisation du procédé d'approvisionnement en énergie, l'étape a comprend en outre : on équipe au moins une station de charge d'un dispositif permettant de mesurer et de transmettre au dispositif informatisé distant pour chaque batterie auxiliaire effectivement présente dans la station de charge des informations comprenant la localisation et le niveau de charge de ladite batterie auxiliaire.

Grâce à cette disposition, le remplissage des stations de charge, et en particulier la disponibilité des batteries auxiliaires chargées, peut être suivi, ce qui permet d'organiser, voire d'optimiser, les tournées auxiliaires.

Selon un mode de réalisation du procédé d'approvisionnement en énergie, la tâche auxiliaire calculée à l'étape d comprend en outre au moins une action parmi {déposer dans une station de charge au moins une batterie auxiliaire au moins partiellement déchargée, recevoir dans une station de charge au moins une batterie auxiliaire au moins partiellement chargée}.

Grâce à cette disposition, la tournée auxiliaire peut comprendre des étapes dans une station de charge, ce qui permet de gérer de manière centralisée au moins une partie des recharges de batteries auxiliaires dans une telle station de charge.

Selon un mode de réalisation du procédé d'approvisionnement en énergie, une ou plusieurs des étapes a, b, c, d et e peuvent être réitérées dans un ordre quelconque.

Grâce à cette disposition, il est possible de calculer et réaliser de manière itérative une tournée auxiliaire, notamment en fonction de l'évolution de la tâche principale.

Selon un mode de réalisation du procédé d'approvisionnement en énergie, l'étape a comprend en outre : on équipe chacune des batteries auxiliaires d'un dispositif permettant de mesurer le niveau de charge de cette batterie auxiliaire.

Grâce à cette disposition, la mesure du niveau de charge de la batterie auxiliaire peut être réalisée quel que soit le lieu où se trouve la batterie auxiliaire, par exemple dans un véhicule principal, dans un véhicule auxiliaire ou dans une station de charge.

Selon un mode de réalisation du procédé d'approvisionnement en énergie, le système électronique de recharge de la batterie de traction du véhicule principal comprend un dispositif permettant de transmettre audit dispositif informatisé distant pour chaque batterie auxiliaire effectivement présente dans ledit véhicule principal des informations comprenant la localisation et le niveau de charge de ladite batterie auxiliaire.

Grâce à cette disposition, le processeur du dispositif informatisé distant peut recevoir en temps réel les informations sur les besoins en batteries auxiliaire du véhicule principal et calculer en temps réel la tâche auxiliaire.

Selon un mode de réalisation du procédé d'approvisionnement en énergie,
- le procédé comprend, après l'étape a et avant l'étape d, une étape de transmission au cours de laquelle au moins un véhicule principal équipé d'au moins une batterie auxiliaire transmet audit dispositif informatisé distant les informations comprenant la localisation et le niveau de charge de la batterie auxiliaire et/ou au moins une station de charge transmet au dispositif informatisé distant les informations comprenant la localisation et le niveau de charge de ladite batterie auxiliaire,
- et à l'étape d, le processeur du dispositif informatisé distant calcule la tâche auxiliaire et la répartit en tournées auxiliaires en fonction des informations comprenant la localisation et le niveau de charge de la batterie auxiliaire.

Grâce à cette disposition, le processeur du dispositif informatisé distant peut optimiser en temps réel la tâche auxiliaire en fonction des besoins des véhicules principaux et des batteries auxiliaires disponibles dans les stations de charge.

Selon un mode de réalisation du procédé d'approvisionnement en énergie,
- au cours de l'étape a, au moins un des véhicules principaux et/ou au moins un des véhicules de transport est équipé d'un dispositif de géolocalisation, les informations de géolocalisation pouvant être transmises au moyen d'un système de communication à l'au moins un dispositif informatisé distant,
- et à l'étape d, le processeur du dispositif informatisé distant utilise en outre lesdites informations de géolocalisation pour calculer et répartir ladite tâche auxiliaire.

Grâce à cette disposition, le processeur du dispositif informatisé distant peut optimiser en temps réel la tâche auxiliaire en fonction des positions des véhicules de transport et/ou de véhicules principaux.

Selon un mode de réalisation du procédé d'approvisionnement en énergie, après l'étape c, et avant l'étape d, le procédé comprend en outre une étape de répartition au cours de laquelle le processeur du dispositif informatisé distant calcule la tâche principale et la répartit en tournées principales en fonction des informations de géolocalisation ou des informations sur la localisation et le niveau de charge d'au moins une batterie auxiliaire. Les tournées principales calculées à l'étape de répartition et auxiliaires calculées à l'étape d sont calculées par le processeur pour optimiser le temps passé par les véhicules principaux à effectuer la tâche principale.

Grâce à cette disposition, la tâche principale et la tâche auxiliaire sont optimisées de manière à ce que la disponibilité des véhicules principaux pour la tâche principale soit maximisée.

Selon un mode de réalisation du procédé d'approvisionnement en énergie, les tournées principales calculées à l'étape de répartition et auxiliaires calculées à l'étape d sont calculées par le processeur du dispositif informatisé distant pour optimiser en outre un ou plusieurs critères parmi {le nombre de véhicules de transport en circulation, la durée totale desdites tournées de transport, la consommation totale des véhicules de transport}.

Selon un mode de réalisation du procédé d'approvisionnement en énergie, les tournées principales calculées à l'étape de répartition, et auxiliaires calculées à l'étape d sont actualisées en temps réel. L'invention se rapporte en outre à une flotte de véhicules comprenant :
- une flotte principale de véhicules électriques dédiée à la réalisation d'une tâche principale, comprenant une pluralité de véhicules principaux, chacun des véhicules principaux étant:
   a) équipé d'un moteur électrique, d'une batterie de traction, et d'un système électronique de charge de la batterie de traction du véhicule principal à partir d'au moins une batterie auxiliaire dont il peut être équipé de manière réversible,
   b) adapté pour effectuer une fraction de la tâche principale sous forme d'une tournée principale comprenant au moins deux étapes de stationnement ;
- une pluralité de batteries auxiliaires;
- au moins un dispositif de charge d'au moins une desdites batteries auxiliaires;
- une flotte auxiliaire de véhicules comprenant au moins un véhicule de transport de batteries auxiliaires, adapté pour effectuer une tâche auxiliaire comprenant au moins une action parmi {transmettre à un véhicule principal pendant une étape de stationnement prévue de ce véhicule principal au moins une batterie auxiliaire au moins partiellement chargée, recevoir d'un véhicule principal pendant une étape de stationnement prévue de ce véhicule principal au moins une batterie auxiliaire au moins partiellement déchargée } ;
- un dispositif informatisé distant:
   1. comportant un processeur et un dispositif de communication à distance,
   2. recevant des informations comprenant au moins le lieu et la date d'une étape de stationnement prévue de la tâche principale,
   3. le processeur étant adapté pour calculer la tâche auxiliaire à partir des informations reçues. L'invention se rapporte enfin à un système électronique de charge destiné à équiper un véhicule principal de la flotte de véhicules précédente, comprenant :
- un ou plusieurs compartiments adaptés pour recevoir chacun une batterie auxiliaire,
- les connecteurs électriques et l'électronique adaptés pour charger la batterie de traction du véhicule principal à partir d'au moins une batterie auxiliaire,
- un convertisseur DC/AC ou DC/DC,
- un dispositif adapté pour transmettre à un dispositif informatisé distant pour chaque batterie auxiliaire effectivement présente dans ledit véhicule principal des informations comprenant la localisation et le niveau de charge de la batterie auxiliaire pour la charge de la batterie de traction à partir d'au moins une batterie auxiliaire,
le système électronique de charge pouvant être monté sur le véhicule principal de manière réversible ou amovible de manière à permettre d'adapter un véhicule électrique existant à l'usage de la flotte principale et/ou de sortir ce véhicule électrique de la flotte principale pour le destiner à un autre usage.

Grâce à cette disposition, il n'est pas nécessaire de disposer de véhicules particuliers pour former la flotte de véhicules principaux. Tout véhicule électrique peut être rendu apte à son intégration au sein d'une flotte de véhicules principaux soit en première monte, soit en post-montage, de manière définitive ou temporaire. Si l'on souhaite utiliser le véhicule principal pour un autre usage que celui de la flotte principale, il est possible de démonter le système électronique de charge et de sortir le véhicule électrique de la flotte principale. Le système électronique de charge confère ainsi une grande souplesse d'adaptation de la flotte principale, en termes de nombre de véhicules électriques qu'elle contient et/ou de types de véhicules électriques qu'elle contient.

L'invention se rapporte enfin à un programme d'ordinateur comprenant des instructions de code de programme pour l'exécution de l'étape d et/ou de l'étape a et/ou de l'étape de répartition du procédé d'approvisionnement en énergie lorsque ce programme est exécuté sur un ordinateur.

### BRÈVE DESCRIPTION DES DESSINS

Des modes de réalisation de l'invention seront décrits ci-dessous par référence aux dessins, décrits brièvement ci-dessous :
Fig.1 représente un mode de réalisation d'une batterie auxiliaire 1.
Fig.2 représente un coffre de voiture électrique équipé d'un boîtier de connexion 2 et de trois batteries auxiliaires 1.

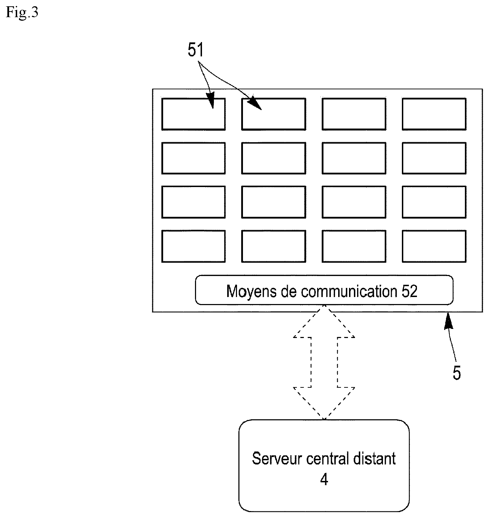

Fig.3 représente un mode de réalisation schématique d'une station de charge 5.
Fig.4 représente sous forme de schéma-bloc l'architecture électrique et électronique du véhicule équipé d'un boîtier de connexion 2 et de trois batteries auxiliaires 1.
Fig.5a représente un premier mode de réalisation d'un arbre de décision pour la gestion de la recharge de la batterie de traction d'un véhicule électrique 7 équipé d'un boîtier de connexion 2 et d'une ou plusieurs batteries auxiliaires 1.
Fig.5b représente un second mode de réalisation d'un arbre de décision pour la gestion de la recharge de la batterie de traction d'un véhicule électrique 7 équipé d'un boîtier de connexion 2 et d'une ou plusieurs batteries auxiliaires 1.

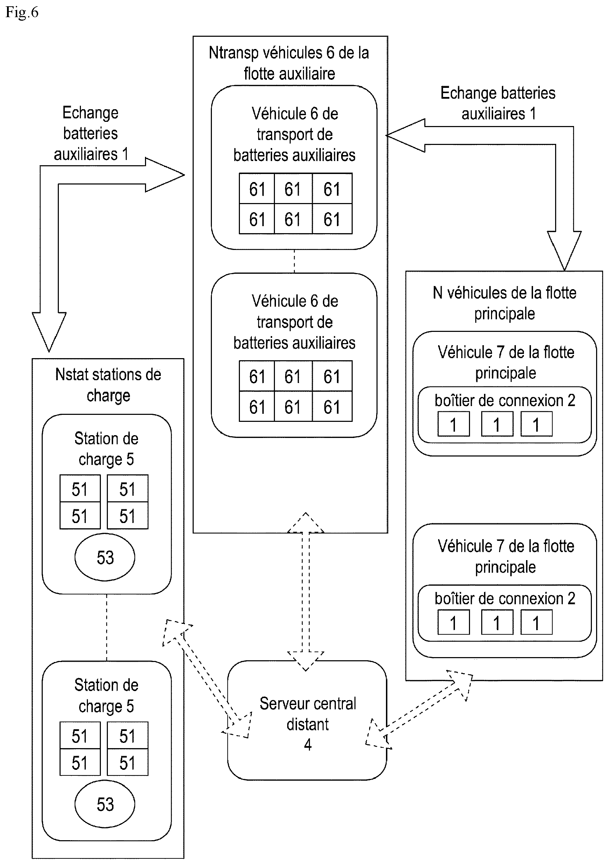

Fig.6 représente sous forme de schéma fonctionnel les différents intervenants dans le procédé de gestion.

Sur les dessins, des références identiques désignent des objets identiques ou similaires.

### DESCRIPTION DÉTAILLÉE

L'invention concerne un procédé d'approvisionnement en énergie d'une flotte principale de véhicules électriques, dits principaux, dédiée à la réalisation d'une tâche principale au moyen de batteries auxiliaires amovibles, d'un dispositif informatisé distant et d'une flotte auxiliaire de véhicules de transport de batteries auxiliaires.

L'invention se rapporte aussi à un système comprenant une flotte principale de véhicules électriques, une pluralité de batteries auxiliaires, au moins un dispositif de recharge de batteries auxiliaires pour la flotte principale de véhicules électriques, une flotte, dite auxiliaire, de véhicules de transport de batteries auxiliaires et un serveur centralisé.

L'invention se rapporte en outre à un système électronique de charge d'une batterie de traction d'un véhicule principal à partir d'une ou plusieurs batteries auxiliaires comprenant un dispositif permettant de mesurer et de transmettre à un dispositif informatisé distant pour chaque batterie auxiliaire effectivement présente dans le véhicule principal des informations comprenant la localisation et le niveau de charge de cette batterie auxiliaire.

L'invention se rapporte enfin à un programme d'ordinateur comprenant des instructions de code de programme pour l'exécution des étapes du procédé d'approvisionnement concernées.

Une flotte principale de véhicules électriques comprend une pluralité de véhicules électriques, qui seront appelés dans la suite véhicules « principaux » 7, comprenant chacun un moteur électrique alimenté par une batterie dite « principale » ou « de traction ».

Les véhicules principaux 7 peuvent notamment être de type deux, trois ou quatre-roues. Ils peuvent tous être du même modèle ou de modèles variés.

La batterie de traction d'un véhicule principal 7 est basée sur l'une quelconque des technologies connues et adaptées aux contraintes des véhicules électriques, notamment en termes d'autonomie, de densité d'énergie stockée, de durée de recharge, de nombres de cycles (donc de durée de vie) et de maintenance.

A titre d'exemple non limitatif, il peut s'agir d'une batterie de type lithium-ion (Li-ion).

Le modèle Zoé^{®} de la marque Renault^{®} est ainsi équipé d'une batterie de traction Li-ion de tension à vide 400 V, embarquant dans un volume de 1280 mm ^{∗} 1630 mm ^{∗}335 mm une énergie maximale de 43 kWh pour un poids de 290 kg. La durée de recharge complète de cette batterie sur une borne publique délivrant une puissance de 22kW est de l'ordre de 3h et le nombre de cycles de l'ordre de 1000 à 1500.

Du fait de son poids, cette batterie de traction est en général implantée sous le plancher du véhicule principal 7, pour que le véhicule conserve une maniabilité et une stabilité satisfaisantes. La batterie de traction est donc à la fois peu accessible et lourde. On comprend que la batterie de traction n'est pas destinée à être manipulée fréquemment par un opérateur mais uniquement pour des opérations de maintenance ou de réparation.

La batterie de traction n'est donc pas une batterie conçue pour être amovible, en particulier pour être échangée avec une autre batterie de traction identique pour réapprovisionner le véhicule électrique principal 7 en énergie.

La batterie de traction peut en revanche être rechargée de manière dite « classique », c'est-à-dire en place, lorsque le véhicule principal 7 est à l'arrêt, grâce à un chargeur connecté sur une prise secteur ou grâce à une borne de recharge adaptée. Dans ce cas « classique », la durée d'une recharge complète dépend de la puissance électrique sous laquelle la recharge est effectuée, mais elle nécessite typiquement plusieurs heures d'immobilisation du véhicule dans un lieu équipé d'une borne de recharge ou d'une prise secteur pour effectuer une recharge.

L'invention vise à s'affranchir des contraintes liées à la recharge de la batterie de traction et à permettre, en complément ou en remplacement d'une recharge classique, la recharge d'un véhicule principal 7 au cours des périodes de stationnement de ce véhicule, même brèves, et dans des lieux ne présentant pas d'infrastructure de recharge.

Dans ce but, chacun des véhicules principaux 7 de la flotte principale selon l'invention est équipé d'un système électronique de charge de la batterie de traction à partir d'au moins une batterie auxiliaire.

De préférence, le système électronique de charge est monté sur le véhicule principal 7 de manière réversible ou même amovible. De cette manière, il est possible d'équiper des véhicules électriques standard de manière non définitive, non intrusive. Cette disposition permet à la fois d'adapter un véhicule électrique existant à l'usage de la flotte principale, et de restituer un véhicule électrique dans son état d'origine, par exemple lors de sa sortie de la flotte principale.

Le fait de pouvoir recharger la batterie de traction au moyen d'une ou plusieurs batteries auxiliaires permet d'amener l'énergie (sous forme de charge électrique) au véhicule, en lui apportant une ou plusieurs batteries auxiliaires.

Dans un mode de réalisation particulier, on apporte à un véhicule principal 7 une ou plusieurs batteries auxiliaires, ponctuellement ou de manière répétée, de sorte que la batterie de traction est toujours chargée au-dessus d'un seuil défini au préalable. Le procédé correspondant sera décrit plus loin dans ce document.

Le procédé suivant l'invention est donc en rupture avec l'usage courant, qui consiste plutôt à déplacer un véhicule principal vers la charge, par exemple vers une station de recharge. Dans l'invention, au contraire, un véhicule principal peut être rechargé à tout endroit où les règles de circulation le permettent.

Un véhicule principal 7 équipé du système électronique de recharge peut conserver sa capacité à être rechargé par le réseau de bornes de recharge classique, mais grâce au système électronique et au procédé de recharge suivant l'invention, il n'est donc plus captif d'une infrastructure de recharge classique.

Le système électronique de charge de la batterie de traction comprend au moins un dispositif de conversion AC/DC ou DC/DC, un dispositif de gestion de l'énergie 231 (« Energy Management System », EMS) gérant la charge de la batterie de traction à partir d'une ou plusieurs batteries auxiliaires et comportant optionnellement des moyens de communication avec un serveur distant, la connectique électrique nécessaire au fonctionnement du système électronique et un module d'interface d'alimentation (« Power Interface Module », PIM) permettant le couplage d'une ou plusieurs batteries auxiliaires sur le circuit de recharge de la batterie de traction.

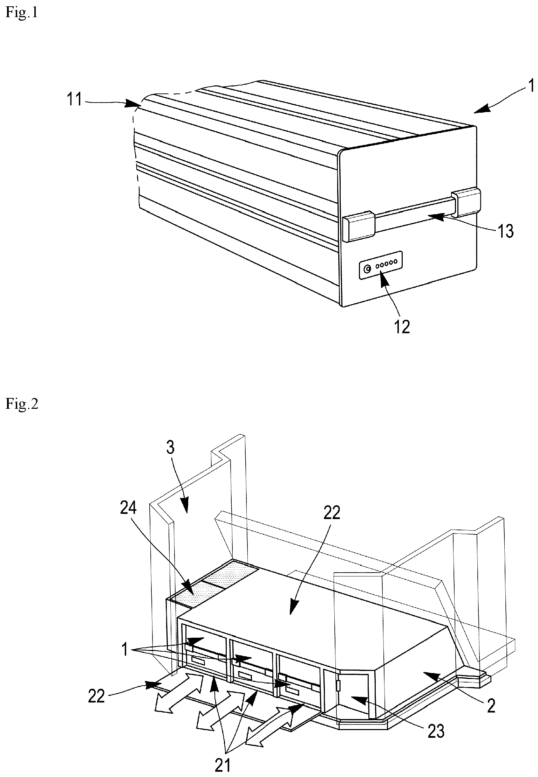

Dans un mode de réalisation particulier représenté sur la Fig. 2, un véhicule principal 7 est équipé, par exemple en post-montage, d'un boîtier de connexion 2 comprenant le système électronique de recharge.

Le boîtier de connexion 2 peut ainsi comporter :
- un compartiment 23 contenant entre autres un dispositif de conversion 232 DC/AC ou DC/DC et un dispositif de gestion de l'énergie 231(« Energy Management System », EMS) ;
- un module d'interface d'alimentation 211 (« Power Interface Module », PIM) par compartiment 21 ;
- un ou plusieurs compartiments 21, destinés à recevoir chacun une batterie auxiliaire 1.

Le dispositif de conversion DC/AC 232 ou DC/DC, encore appelé convertisseur, permet la conversion d'une tension continue égale à la tension nominale d'une batterie auxiliaire, comprise entre de l'ordre de 30VDC et de l'ordre de 60VDC (à titre d'exemple 48V (48VDC)) en tension alternative 230V (230VAC) adaptée pour la recharge de la batterie de traction du véhicule dans le cas d'un convertisseur DC/AC.

Le boîtier de connexion 2 comprend en outre tous les éléments de connexion électrique et les câbles nécessaires pour la recharge de la batterie de traction à partir de la ou des batteries auxiliaires 1.

Dans un mode de réalisation particulier, les éléments de connexion électrique et les câbles nécessaires pour la recharge de la batterie de traction à partir d'une ou plusieurs batteries auxiliaires 1 sont identiques du point de vue de la batterie de traction aux éléments de connexion électrique et les câbles nécessaires pour la recharge de la batterie de traction sur une prise AC 230V, par exemple 32 A.

Dans un mode de réalisation particulier, le boîtier de connexion 2 peut être installé en post-montage sur un véhicule principal 7, sans modification majeure de ce dernier. Le boîtier de connexion 2 peut grâce à cette disposition être démonté pour que le véhicule principal 7 reprenne son aspect initial lorsqu'il sort de la flotte principale de véhicules, notamment s'il est revendu et que la mise en oeuvre du procédé de recharge décrit ici n'est plus souhaitée.

En particulier, dans le cas d'un véhicule principal 7 de type automobile, on peut envisager d'installer le boîtier de connexion 2 dans le coffre 3 du véhicule, de manière à ce que l'accès au boîtier de connexion 2 soit aisé pour le conducteur ou toute autre personne assurant la mise en place ou le remplacement d'une batterie auxiliaire 1. Ce mode de réalisation est représenté sur la Fig. 2.

Le boîtier de connexion 2 peut optionnellement présenter une surface supérieure 22 plane et horizontale, de manière à ce que le coffre 3, une fois équipé du boîtier de connexion 2, puisse continuer à assurer sa fonction de stockage d'objets à transporter de manière satisfaisante.

Le volume total, les dimensions et les angles dièdres entre les surfaces latérales supérieure et inférieure du boîtier de connexion 2 peuvent être adaptés en fonction de l'espace dans lequel ce boîtier doit être monté a posteriori. Dans le cas d'une automobile, le boîtier de connexion 2 pourra par exemple prendre appui sur les parois intérieures latérales et inférieures du coffre du véhicule, de manière à ce qu'il soit encastré dans ce coffre.

Dans le cas d'un véhicule principal 7 à deux ou trois roues de type scooter, le boîtier de connexion 2 pourra par exemple prendre appui sur une zone du plancher située entre les deux repose-pieds. Tout autre mode de fixation qui conserve le caractère démontable du boîtier de connexion 2 pourra être envisagé, notamment une fixation par vissage.

Un mode de réalisation particulier d'une batterie auxiliaire 1 est représenté sur la Fig. 1.

Une batterie auxiliaire 1 est une batterie de stockage, permettant de stocker tout ou partie de l'énergie nécessaire à la recharge de la batterie de traction.

La technologie peut être choisie pour que les densités massique et volumique d'énergie stockée soient élevées, de manière à optimiser le poids et/ou l'encombrement de la batterie auxiliaire, et ainsi proposer une batterie auxiliaire 1 disposant d'un maximum d'énergie transférable à la batterie de traction dans le minimum de place.

Dans un mode de réalisation particulier, deux, trois, quatre, cinq ou six batteries auxiliaires 1 permettent une recharge partielle de la batterie de traction et le poids de chaque batterie auxiliaire 1 est inférieur à 20 kg, à 15 kg ou encore à 10 kg de manière à faciliter sa manipulation par un être humain.

Par exemple, une batterie auxiliaire 1 est de type lithium-ion (Li-ion).

La recharge partielle permise par une à six batteries auxiliaires 1 représente une recharge par exemple de 10%, par exemple de 15 %, par exemple de 20%, par exemple de 25%, par exemple de 30%, ou par exemple de 40% de la charge totale de la batterie de traction.

La répartition de cette capacité de recharge partielle entre une, deux, trois, quatre, cinq ou six batteries dépend notamment de la modularité de la recharge recherchée ainsi que de la durée de la recharge souhaitée dans l'une ou l'autre des modalités de recharge décrites plus loin.

La tension totale disponible à vide aux bornes d'une batterie auxiliaire 1 est de préférence choisie de manière à être dans la gamme de très basse tension de sécurité, à savoir inférieure à 60V DC. Cette disposition permet la manipulation d'une batterie auxiliaire 1, par exemple lors de son insertion dans un compartiment ou de son extraction hors du compartiment, sans risque électrique significatif pour le conducteur du véhicule ou toute autre personne réalisant la manipulation.

La batterie auxiliaire 1 comporte en outre les connecteurs nécessaires à son insertion dans un circuit électrique, par exemple la portion mâle ou la portion femelle d'un dispositif de connexion. Ces connecteurs sont, dans le mode de réalisation présenté à la Fig. 1, placés sur la face arrière de la batterie auxiliaire 1.

L'avant et l'arrière sont définis dans tout le document par rapport à l'avant et à l'arrière du véhicule dans lequel la batterie auxiliaire 1 est insérée.

Une batterie auxiliaire 1 est destinée à être insérée de manière amovible dans un boîtier de connexion 2 équipant un véhicule électrique.

Pour faciliter la mise en place de la batterie auxiliaire 1 dans un compartiment 21 ou sa dépose, celle-ci comporte optionnellement une poignée 13. La poignée 13 est, dans le mode de réalisation présenté à la Fig. 1, placée sur la face arrière de la batterie auxiliaire 1 en vue d'une insertion dans un compartiment 21 par un mouvement de l'arrière vers l'avant. Elle peut aussi être placée par exemple sur la face supérieure de la batterie auxiliaire 1 si celle-ci est insérée dans un compartiment 21 par un mouvement de haut en bas.

Une batterie auxiliaire 1 comprend en outre optionnellement un indicateur du niveau de charge de la batterie 12, tel qu'un affichage à LEDs comprenant par exemple cinq ou dix segments, placé par exemple sur la même face que la poignée de transport 13.

Dans un mode de réalisation particulier, une batterie auxiliaire 1 comprend un dispositif permettant de mesurer son niveau de charge et de transmettre les informations correspondantes à un dispositif de gestion de l'énergie (EMS) 231.

Le dispositif de mesure du niveau de charge est de préférence lié à la batterie auxiliaire, mais il peut aussi dans un mode de réalisation particulier être lié au boîtier de connexion 2, par exemple au compartiment 21 du boîtier de connexion 2.

Une batterie auxiliaire 1 peut être (re)chargée au moyen d'un dispositif de recharge tel qu'un chargeur. Le dispositif de charge (équivalemment de recharge) est de préférence placé dans un lieu de recharge dédié, appelé station de charge 5 des batteries auxiliaires 1.

Une fois chargée, une batterie auxiliaire 1 peut être transportée jusqu'à un véhicule principal 7 équipé d'un boîtier de connexion 2, pour y être insérée dans un compartiment 21 de ce boîtier de connexion 2. Une fois déchargée, une batterie auxiliaire 1 peut être transportée d'un véhicule principal 7 équipé d'un boîtier de connexion 2 vers un véhicule de transport 6 (décrit plus loin) (ou même éventuellement vers un autre véhicule principal 7), ou d'un véhicule de transport 6 (ou même éventuellement d'un véhicule principal 7) vers une station de charge 5.

La géométrie du boîtier de connexion 2 tient aussi compte du nombre et du type de batteries auxiliaires 1 que l'on souhaite pouvoir y loger, donc du nombre et de la taille des compartiments nécessaires.

Ce nombre et ce type dépendent de l'énergie totale qui doit pouvoir être fournie à la batterie de traction pour sa recharge, ainsi que de la modularité de cette recharge, c'est-à-dire de la plus petite unité de recharge que l'on souhaite définir. Une batterie auxiliaire 1 correspond à une plus petite unité de recharge, dont le poids, la durée de charge et l'énergie maximale stockée peuvent être choisies en fonction des usages de la flotte principale à équiper (parmi lesquels le type de trajets (ville/route/... ), la durée des trajets, la taille/le poids des véhicules,... ).

On pourra par exemple limiter la masse de la batterie auxiliaire 1 à une masse de l'ordre 5kg, 10 kg, 15 kg ou 20 kg, de manière à ce que sa manipulation reste aisée pour tout opérateur. Une batterie auxiliaire 1 Li-ion de ce poids embarque une énergie de l'ordre de 1 à 10 kWh, suffisante pour recharger de 1 % à 23 % d'une batterie de traction équipant un véhicule de type Zoé^{®} de la marque Renault^{®} équipée d'une batterie de traction de 43 kWh

Dans un mode de réalisation, le boîtier de connexion 2 comprend deux, trois quatre, cinq ou six compartiments 21 identiques, essentiellement parallélépipédiques, pouvant chacun accueillir une batterie auxiliaire 1. Ainsi, dans le cas de la Fig.2, le boîtier de connexion 2 comprend trois compartiments 21 et il est représenté avec trois batteries auxiliaires 1 insérées dans ces trois compartiments 21.

Tous les compartiments 21 (ou seulement une partie des compartiments 21) peuvent contenir une batterie auxiliaire 1 lorsque le véhicule principal se déplace ou stationne. Il est aussi possible que sur une fraction d"un déplacement du véhicule principal, l'ensemble des compartiments 21 soient vides, notamment si l'autonomie du véhicule est suffisante pour qu'il atteigne une prochaine étape programmée de recharge de la batterie de traction ou d'échange de batteries auxiliaires 1. Chaque compartiment 21 comprend les éléments de connexion et l'électronique nécessaires pour insérer la batterie auxiliaire 1 qu'il contient dans le circuit électrique de recharge de la batterie de traction. Par exemple, un compartiment 21 comprend la partie complémentaire (mâle ou femelle) de la partie du dispositif de connexion comprise dans une batterie auxiliaire 1.

Chaque compartiment 21 peut en outre être relié à un module d'interface d'alimentation 211 (« Power Interface Module », PIM) permettant de coupler ou découpler la batterie auxiliaire 1 qu'il pilote sur le circuit de recharge de la batterie de traction en fonction des instructions transmises par le dispositif de gestion de l'énergie (EMS) 231.

Dans un mode de réalisation particulier, chaque compartiment 21 comprend un dispositif permettant de mesurer le niveau de charge d'une batterie auxiliaire 1 qu'il reçoit et de transmettre les informations correspondantes au dispositif de gestion de l'énergie (EMS) 231 et/ou processeur distant 4.

Optionnellement, le boîtier de connexion 2 comprend un ou plusieurs moyens d'aération 24, par exemple une grille d'aération, pour assurer la gestion thermique de la ou des batteries auxiliaires 1 pendant l'opération de recharge dans la batterie de traction.

Le boîtier de connexion 2 peut intégrer, par exemple dans une zone 23 ne comprenant pas de compartiment 21, un dispositif de gestion de l'énergie (EMS) 231.

Le dispositif de gestion de l'énergie (EMS) 231 échange des informations avec la batterie de traction du véhicule et avec les modules d'interface d'alimentation 211 de chacun des compartiments 21, et il transmet des instructions au dispositif de conversion DC/AC ou DC/DC. Le dispositif de gestion de l'énergie 231 reçoit notamment des informations concernant la disponibilité du véhicule pour la charge de la batterie de traction par une ou plusieurs batteries auxiliaires 1, ainsi que le niveau de charge des batteries auxiliaires 1. En fonction des informations reçues, il déclenche la recharge de la batterie de traction à partir d'une ou plusieurs batteries auxiliaires 1 au travers du dispositif de conversion DC/AC ou DC/DC ou bien l'arrêt de cette recharge, suivant un algorithme qui sera décrit plus loin.

Le dispositif de gestion de l'énergie 231 peut aussi recevoir des informations sur le niveau de charge de la batterie de traction du véhicule principal 7.

Le boîtier de connexion 2 comprend en outre un système de communication 25 avec un serveur central distant 4. Le système de communication 25 permet notamment de transmettre au serveur central distant 4 des informations sur les niveaux de charge des batteries auxiliaires et principale présentes dans le véhicule principal 7 que le boîtier équipe, ainsi que des informations sur la position du véhicule.

Dans ce but, un système de géolocalisation tel qu'un GPS est nécessaire. Il peut être intégré au boîtier de connexion 2 mais l'information de géolocalisation peut également provenir du véhicule principal si cette fonction existe sur ce dernier et que son constructeur en permet la récupération. Le système de communication 25 permet aussi de recevoir des instructions du serveur central distant 4, notamment des instructions de parcours, de stationnement et d'échange d'une ou plusieurs batteries auxiliaires 1.

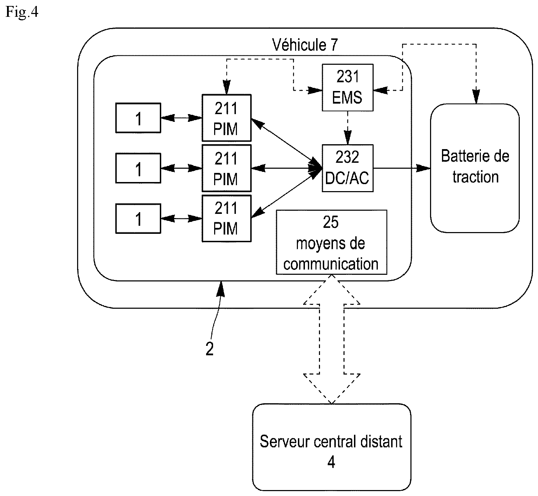

La Fig.4 représente, sous forme de schéma bloc pour un véhicule principal 7 équipé d'un boîtier de connexion 2 muni de trois batteries auxiliaires 1, les interactions entre les différents éléments mentionnés.

Dans un mode de réalisation particulier, la recharge de la batterie de traction à partir d'une ou plusieurs batteries auxiliaires 1 s'effectue lorsque le véhicule principal 7 stationne.

On considère par exemple qu'un véhicule stationne lorsqu'il est inoccupé, immobile et que le moteur électrique est arrêté. Par exemple, la clé de contact peut avoir été retirée pour le stationnement du véhicule. Un véhicule principal ainsi stationné peut être disponible pour la recharge de la batterie de traction par les batteries auxiliaires 1 et/ou pour recevoir et/ou céder une ou plusieurs batteries auxiliaires.

Le but recherché est de rendre la flotte de véhicules principaux 7 aussi peu dépendante que possible d'une infrastructure de recharge de la batterie de traction.

L'énergie nécessaire à cette recharge est stockée dans les batteries auxiliaires 1 et apportée aux véhicules principaux 7 sur leurs lieux de stationnement au moyen de la flotte auxiliaire de véhicules de transport de batteries auxiliaires 1 (ou équivalemment flotte de transport ou flotte auxiliaire) en fonction des besoins de la flotte principale.

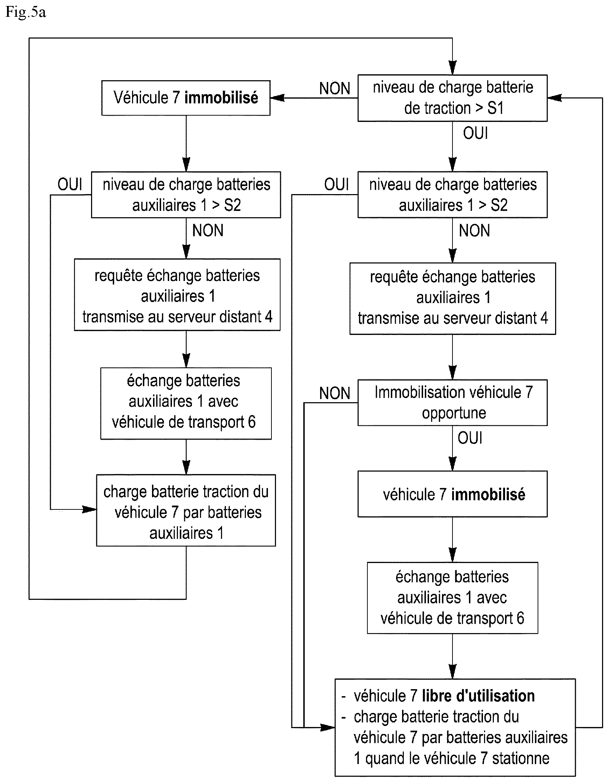

Pour cela, le dispositif de gestion de l'énergie 231 d'un véhicule principal 7 donné évalue périodiquement le niveau de charge de la batterie de traction que ce véhicule principal 7 contient et prend des décisions suivant un arbre de décision dont un mode de réalisation particulier est représenté à la Fig.5a.

Un véhicule principal 7 peut être placé dans deux états en fonction de l'état de charge de la batterie de traction :
- Si le niveau de charge de la batterie de traction est inférieur à un seuil S1 prédéterminé, ce véhicule principal 7 est placé dans l'état « immobilisé » c'est-à-dire qu'il n'est pas (ou qu'il n'est plus) autorisé à se déplacer et doit être stationné dès que possible.
- Si le niveau de charge de la batterie de traction est supérieur au seuil S1 prédéterminé, le niveau de charge de la ou des batteries auxiliaires 1 qu'il contient est évalué :
   - Si ce niveau de charge est supérieur à un seuil S2 prédéterminé, le véhicule est placé dans l'état « libre d'utilisation ». Il peut circuler librement et à chaque fois que le véhicule est stationné, l'EMS pilote la recharge de la batterie de traction par les batteries auxiliaires 1.
   - Si ce niveau de charge est inférieur à un seuil S2 prédéterminé, l'opportunité d'immobiliser le véhicule en le stationnant pour procéder à un échange d'une ou plusieurs batteries auxiliaires 1 est évaluée.
      > Dans l'affirmative, on stationne le véhicule, on procède à l'échange d'une ou plusieurs batteries auxiliaires apportées par un véhicule de transport 6 de batteries auxiliaires, puis le véhicule est placé dans l'état « libre d'utilisation à l'issue de l'échange »
      > Dans la négative, le véhicule est placé dans l'état « libre d'utilisation jusqu'à la prochaine itération de l'évaluation du niveau de charge de la batterie de traction que ce véhicule principal 7 contient.

Le niveau de charge de la batterie de traction et des batteries auxiliaires 1 peut être systématiquement évalué à l'extinction du moteur du véhicule principal 7 et avant que le véhicule ne démarre.

Par exemple, si un véhicule principal 7 est proposé à la location, le niveau de charge de la batterie de traction peut être évalué avant sa mise en disponibilité pour la location, de sorte qu'un véhicule principal 7 ne pourra être effectivement loué que s'il est dans l'état « libre d'utilisation ».

A sa restitution, le niveau de charge de la batterie de traction peut à nouveau être évalué. Si le niveau de charge de la batterie de traction est supérieur au seuil prédéterminé S1, mais que le niveau de charge des batteries auxiliaires qu'il contient est inférieur au seuil prédéterminé S2, on peut considérer qu'il est possible d'immobiliser le véhicule, puisqu'il est restitué et a priori pas encore reloué. Dans ce cas, un véhicule de transport 6 peut se déplacer jusqu'au véhicule principal pour procéder à un échange d'une ou plusieurs batteries auxiliaires.

Dans un autre mode de réalisation, par exemple si la demande en véhicules principaux 7 à louer est forte, la possibilité d'immobiliser le véhicule principal 7 dont l'échange des batteries auxiliaires pourrait être nécessaire peut être évaluée en fonction de la demande de véhicules principaux et/ou des véhicules de transport 6 disponibles pour effectuer l'échange des batteries auxiliaires et du délai nécessaire pour cet échange.

Dans tous les cas, puisque le niveau de charge de la batterie de traction a été évalué comme supérieur au seuil prédéterminé S1, le véhicule principal 7 peut être placé si nécessaire dans l'état « libre d'utilisation » puisqu'il contient suffisamment d'énergie pour son usage habituel, jusqu'à au moins la prochaine itération de l'évaluation du niveau de charge de la batterie de traction

Si le niveau de charge de la ou des batteries auxiliaires 1 est inférieur à un seuil S2 prédéterminé, l'échange de la ou des batteries auxiliaires 1 concernées est demandé au serveur central distant par l'intermédiaire du système de communication 25 et le véhicule reste stationné jusqu'à cet échange et à la recharge de la batterie de traction au-delà du seuil prédéterminé S1 si ce n'est pas déjà le cas. Tant que la recharge de la batterie de traction au-delà du seuil S1 n'est pas terminée, le véhicule principal ne peut pas être alloué à un réservataire pour une date de départ avant la fin de l'échange et de la recharge.

Le seuil prédéterminé S2 peut être ajusté à l'usage. A titre d'exemple, il peut correspondre à un niveau de charge d'une batterie auxiliaire 1 égal à 10%, optionnellement 15%, optionnellement 20 %, optionnellement 25 %, optionnellement 30%, optionnellement 40 %, optionnellement 50% du niveau de charge maximale de cette batterie.

Si l'état de charge de la ou des batteries auxiliaires 1 est supérieur au seuil S2 prédéterminé, la recharge de la batterie de traction à partir de la ou des batteries auxiliaires 1 suffisamment chargées est mise en oeuvre, à l'issue de quoi l'état de charge de la batterie de traction est à nouveau évalué.

Si l'état de charge de la batterie de traction est supérieur au seuil S1 prédéterminé (dès la première étape de comparaison ou à l'issue d'une étape de recharge), le véhicule principal 7 est libre d'utilisation. Il peut donc par exemple être alloué à un réservataire. Lors des phases de stationnement ultérieures du véhicule, la recharge de la batterie de traction par les batteries auxiliaires 1 est systématiquement réalisée par le dispositif de gestion de l'énergie 231.

Pour cela, le dispositif de gestion de l'énergie 231 reçoit périodiquement des informations de l'état de marche ou d'arrêt du moteur électrique

La remise en marche du véhicule interrompt le processus de recharge, qui sera remis en œuvre pendant les phases de stationnement suivantes, jusqu'à recharge complète de la batterie de traction et/ou décharge complète des batteries auxiliaires 1, c'est-à-dire tant que le niveau de charge de ces dernières est supérieur au seuil S2 prédéterminé.

Un véhicule principal 7 fait partie d'une flotte de véhicule dite principale. Le nombre de véhicules principaux 7 de la flotte principale est noté dans la suite Nprinc.

Dans un premier mode de réalisation de la flotte principale, les véhicules principaux 7 sont mis à disposition sur un territoire donné, c'est-à-dire qu'ils peuvent chacun être mis à disposition d'un réservataire en tout point de stationnement autorisé de ce territoire, et qu'ils doivent être restitués par ce réservataire en tout point de stationnement autorisé de ce territoire.

Typiquement, la flotte principale est, dans ce premier mode de réalisation, de type flotte en libre-service (« free-floating »).

La mise à disposition d'un véhicule principal 7 peut être indifféremment un service payant ou gratuit.

Un véhicule principal 7 se trouvant hors de ce territoire est considéré comme indisponible, jusqu'à son retour dans ce territoire.

Le territoire peut par exemple être une subdivision administrative ou géographique d'un territoire national d'intérêt particulier, tel qu'une ville ou une aire urbaine.

Les points de départ et d'arrivée peuvent être prédéfinis, c'est-à-dire correspondre à des stations dédiées au stationnement des véhicules principaux 7, ou libres, c'est-à-dire correspondre à tout lieu de stationnement autorisé au public. Il est possible mais en rien nécessaire que ces lieux de stationnement publics disposent d'équipements particuliers, en particulier de moyens de recharge du véhicule électrique.

La réservation d'un véhicule se fait par l'intermédiaire d'un serveur distant 4, recevant au moyen d'un système de communication les informations sur les véhicules principaux 7 disponibles, leur localisation, les requêtes de réservation comprenant des informations telles que l'identification du réservataire, la localisation du point de départ et l'heure du départ souhaités, un trajet à parcourir entre un point de départ et un point d'arrivée et éventuellement des étapes intermédiaires entre ce point de départ et ce point d'arrivée et/ou une durée de réservation entre les points de départ et d'arrivée ou une heure de restitution.

Suivant la formule de mise à disposition, tout ou partie de ces informations sera nécessaire pour qu'une requête de formulation soit effectivement recevable.

La requête de réservation peut par exemple être formulée et transmise au moyen d'un dispositif électronique de communication fixe, ou portable, tel qu'un smartphone. Le dispositif électronique peut appartenir au réservataire ou être mis à la disposition du réservataire.

En fonction des véhicules principaux 7 disponibles, le serveur 4 distant alloue, si cela est possible, un véhicule principal 7 à un réservataire à partir d'une date donnée. Ce véhicule est récupéré par le réservataire en un point de stationnement autorisé se trouvant à une distance inférieure à une distance Ddep seuil prédéterminée du point de départ souhaité.

La distance seuil prédéterminée Ddep peut à titre d'exemple être commune à tous les réservataires ou choisie par un réservataire donné, par exemple au moment d'une réservation donnée ou encore pour l'ensemble des réservations faites par ce réservataire.

Optionnellement, le serveur 4 distant peut proposer un ensemble de véhicules principaux 7 potentiellement disponibles pour une requête de réservation et le réservataire peut effectuer un choix parmi cet ensemble suivant des critères qui lui sont propres.

Dans tous les cas, un véhicule principal 7 ne peut être alloué à un réservataire que s'il est dans l'état « libre d'utilisation ».

Une fois un véhicule principal 7 alloué à un réservataire (qui sera en général le conducteur du véhicule principal 7 pour cette réservation), un trajet est associé à ce véhicule. Le trajet comprend au moins un point de départ et une heure de départ associée, un point d'arrivée et une heure d'arrivée associée.

Le point d'arrivée et l'heure d'arrivée associée peuvent dans un mode de réalisation particulier ne pas être connus dès le départ du véhicule et n'être associés au véhicule principal 7 qu'une fois le véhicule restitué. Dans ce cas, le véhicule principal 7 peut par exemple être réservé pour une durée maximale, ou une distance de parcours maximale, en fonction de l'état de charge de ses batteries.

L'heure d'arrivée d'un trajet d'un véhicule donné et l'heure de départ du trajet suivant de ce véhicule sont séparées d'une durée de stationnement (qui peut varier suivant les véhicules principaux, les trajets et les réservations enregistrées successivement) en un lieu de stationnement, à savoir le lieu d'arrivée du premier des deux trajets, identique au lieu de départ du second des deux trajets.

Optionnellement, le réservataire peut inclure dans les données de réservation transmises au serveur distant 4 des étapes de stationnement intermédiaires et éventuellement des durées de stationnement associées.

A un véhicule principal 7 donné, on peut associer sur une période de temps donnée une tournée dite principale définie comme une succession ordonnée d'étapes de stationnement à chacune desquelles une durée de stationnement est associée. Cette tournée peut être définie de manière incrémentale, en fonction des requêtes de réservation transmises au serveur distant.

Les informations sur les étapes de stationnement, telle que la localisation de l'étape de stationnement, l'heure de début de l'étape de stationnement, l'heure de fin de l'étape de stationnement ou une durée de stationnement peuvent être transmises au serveur distant 4 au moyen d'un dispositif électronique de communication fixe, ou portable, tel qu'un smartphone, qui appartient au réservataire ou est mis à sa disposition, ce dispositif de communication n'étant donc pas nécessairement associé à un véhicule principal 7 donné en permanence.

Dans ce premier mode de réalisation de la flotte principale, une tournée principale peut être effectuée par un seul ou plusieurs réservataires. Elle peut être définie sur une période de temps donnée, par exemple quotidiennement, ou actualisée en temps réel par exemple.

L'ensemble des tournées principales permet donc que la flotte principale effectue une tâche dite « principale » qui est dans ce mode de réalisation définie comme la réalisation de trajets pour des réservataires.

Dans un deuxième mode de réalisation de la flotte principale, les véhicules principaux 7 forment une flotte de véhicules d'entreprise et sont alloués à un ensemble de conducteurs de manière à ce qu'un ensemble de tâches (ou équivalemment opérations), appelé ici encore « tâche principale », soit effectuée par les conducteurs sur des périodes de travail continue, par exemple une demi-journée ou une journée de travail.

Dans ce deuxième mode de réalisation de la flotte principale, la tâche principale peut comporter à titre d'exemple des opérations de maintenance sur des sites publics ou privés (mais accessibles au personnel de l'entreprise), des opérations de livraison, des services à la personne, etc. Elle peut être homogène ou comporter plusieurs types d'opérations distincts.

A la différence du premier mode de réalisation, les informations sur les étapes de stationnement connues à l'avance sont plus nombreuses. La tâche principale peut donc par exemple être en grande partie planifiée un ou plusieurs jours à l'avance.

Par ailleurs, les conducteurs peuvent - mais n'ont pas nécessairement besoin de - envoyer des requêtes de réservation, c'est-à-dire que l'allocation des véhicules principaux peut être faite sans intervention volontaire des conducteurs.

Dans le cas où la tâche principale peut être planifiée, des moyens de calcul informatisés peuvent optionnellement être mis en oeuvre pour optimiser la répartition des opérations à effectuer et des véhicules entre les différents conducteurs.

Au début de chaque période de travail, un conducteur de véhicule principal se voit donc attribuer un véhicule principal 7 de la flotte principale, pour lequel une tournée principale est calculée par des moyens de calcul informatisés dédiés équipant un serveur distant 4 et recevant les informations sur les véhicules principaux 7 disponibles, leur localisation, la tâche principale, et les conducteurs disponibles et compétents pour tout ou partie de cette tâche principale ainsi que la localisation de ces derniers.

La réalisation de l'ensemble des tournées principales ainsi calculées permet la réalisation de l'ensemble de la tâche principale.

De préférence, la zone géographique dans laquelle la tâche principale est effectuée est limitée et si un véhicule principal 7 sort de cette zone géographique, il est considéré comme indisponible par le serveur distant 4 jusqu'à ce qu'il revienne dans cette zone géographique.

Un opérateur peut dans ce deuxième mode de réalisation de la flotte principale transmettre au serveur distant 4 par l'intermédiaire d'un client tout ou partie des informations nécessaires au calcul des tournées principales ou des mises à jour de ces informations. L'opérateur peut par exemple transmettre des étapes auxquelles un conducteur d'un véhicule de la flotte principale doit se rendre pour y effectuer une opération, la durée de cette opération, une ou plusieurs dates auxquelles cette opération peut être effectuée, les noms des différents conducteurs compétents pour effectuer l'opération, la disponibilité des conducteurs...

Une tournée principale d'un véhicule principal 7 comprend donc, dans ce deuxième mode de réalisation de la flotte principale, de la même façon que pour le premier mode de réalisation de la flotte principale, une succession ordonnée d'étapes de stationnement à chacune desquelles une durée de stationnement est associée.

Dans ce second mode de réalisation de la flotte principale, la durée de stationnement peut être calculée notamment en fonction de la tâche à y effectuer.

Optionnellement, la tournée principale comprend la trajectoire à suivre entre une étape de stationnement et la suivante.

Comme vu plus haut, si à un instant, l'état de charge de l'ensemble des batteries auxiliaires 1 est déterminé comme inférieur au seuil S2 prédéterminé, la possibilité d'immobiliser le véhicule principal est évaluée. Si cette immobilisation est possible, l'échange des batteries auxiliaires 1 concernées est demandé au serveur central distant 4 par l'intermédiaire du système de communication 25 et le véhicule principal 7 reste stationné jusqu'à cet échange.

Si le véhicule principal 7 ne peut pas être immobilisé, le véhicule est autorisé à poursuivre sa tournée tant que l'état de charge de la batterie de traction reste supérieur au seuil prédéterminé S1. Ceci afin d'éviter au maximum l'immobilisation forcée du véhicule

Les seuils S1 et S2 peuvent être fixés pour l'ensemble des réservataires, le trajet maximal autorisé lors de la réservation étant alors imposé par rapport à ces seuils.

Ou bien les seuils S 1 et S2 peuvent être adaptés, notamment en temps réel en fonction par exemple des requêtes de réservation, des conditions climatiques, des conditions de circulation, des plages horaires (pour tenir compte des heures de pointe du trafic par exemple).

Une phase d'apprentissage peut être mise en oeuvre pour déterminer les seuils S1 et S2 adaptés à une flotte principale donnée.

Dans un mode de réalisation plus complexe, le seuil S1 peut par exemple correspondre à la charge nécessaire pour assurer une fraction prédéterminée de la tournée principale, par exemple la prochaine étape de stationnement ou les n prochaines étapes de stationnement, une pondération pouvant être prévue. Dans le premier mode de réalisation de la flotte principale, cette pondération peut tenir compte de critères d'optimisation variés (optimisation suivant le nombre de requêtes satisfaites, la durée / la distance totale des réservations satisfaites, le coût total des réservations satisfaites ... ). Dans le deuxième mode de réalisation de la flotte principale, la pondération peut être fonction entre autres de la durée ou de l'urgence des opérations à effectuer à chaque étape. Le seuil S1 peut être une constante ou il peut être adapté de manière itérative, par exemple à la tournée à effectuer, aux statistiques de circulation pour un parcours et/ou un jour donnés, ou encore au mode de conduite d'un conducteur particulier.

La recharge de la batterie de traction peut être mise en oeuvre suivant deux modalités :
- Dans la première modalité, l'ensemble (ou plusieurs) des batteries auxiliaires 1 présentes dans le véhicule principal 7 sont déchargées simultanément et le seuil S2 est défini par rapport au niveau de charge total de l'ensemble formé par toutes les batteries auxiliaires 1 présentes dans le véhicule. Pour être déchargées simultanément les batteries auxiliaires 1 doivent être connectées en parallèle. Cette première modalité permet notamment une recharge rapide, donc un temps de recharge du véhicule inférieur à celui de la deuxième modalité décrite ci-après, puisque le courant de charge (et donc la puissance de charge) permis par la parallélisation est plus important que le courant de charge obtenu avec une seule des batteries auxiliaires 1. Cette modalité nécessite de piloter la mise en parallèle de ces batteries auxiliaires 1 à l'aide des modules d'interface d'alimentation 211 (PIM) et du dispositif de gestion de l'énergie (EMS) 231. En effet, des batteries de tension différentes ne peuvent être mises en parallèle sans contrôle. La batterie de tension la plus élevée se déchargerait dans la batterie de tension la plus faible.
- Dans la deuxième modalité, ces batteries auxiliaires 1 sont déchargées de manière séquentielle. Le seuil S2 correspond alors au fait qu'un pourcentage X% des batteries auxiliaires 1 présentes dans le véhicule principal ont une charge égale à Y% de leur charge maximale. X et Y peuvent être adaptés à l'usage de la flotte principale de véhicules.
- A l'issue de la recharge, l'état de charge de la batterie de traction est à nouveau comparé au seuil S1.

Dans un mode de réalisation particulier, des dérogations à l'immobilisation du véhicule peuvent être prévues en fonction de l'heure et de la localisation du véhicule. Par exemple, si les batteries auxiliaires 1 du véhicule principal 7 sont déchargées en-deçà du seuil S2 et si sa batterie de traction chargée au-dessus d'un certain seuil prédéterminé S4, le véhicule principal 7 peut être autorisé à terminer sa tournée ou au moins à en effectuer une partie.

Le seuil S4 peut par exemple être défini comme le niveau de charge qui permet d'atteindre une zone équipée pour la recharge de la batterie de traction (telle que le domicile du conducteur ou une borne de recharge à proximité d'une étape de stationnement prévue, notamment en fin de période de travail) ou l'échange des batteries auxiliaires 1.

L'ensemble des véhicules principaux 7 de la flotte principale peut communiquer avec le serveur central distant 4 grâce au système de communication 25.

Le serveur central 4 distant est lui aussi équipé d'un système de communication qui lui permet notamment de recevoir des informations sur les positions des véhicules en temps réel ainsi que les niveaux de charges de leurs batteries principales et auxiliaires 1. Le serveur central 4 peut transmettre, grâce au système de communication, des informations à chaque véhicule 7 telles qu'une mise à jour de la tournée à effectuer ainsi que des instructions d'échange de batteries auxiliaires 1.

La charge des batteries auxiliaires 1 déchargées est mise en oeuvre dans une ou plusieurs stations de charge 5 dédiées.

Une station de charge 5 comprend par exemple un rack comportant un nombre Ncomp de compartiments 51 de dimensions analogues à celles d'un compartiment 21 et les éléments de connexion nécessaires pour assurer la recharge simultanée des batteries auxiliaires 1 qui seraient insérées dans tout ou partie des Ncomp compartiments.

Une station de charge 5 comprend par ailleurs au moins un dispositif de charge 53 d'au moins une batterie auxiliaire 1.

Dans un mode de réalisation particulier, une station de charge 5 comprend un système de communication permettant de transmettre au serveur distant 4 des informations sur le remplissage de chacun des compartiments 51 et, le cas échéant et optionnellement, sur le niveau de charge d'une batterie auxiliaire 1 qu'ils contiennent. Ce système de communication permet à la station de charge 5 de recevoir des informations, telles qu'une instruction d'échange de batterie auxiliaire 1 avec un véhicule de transport 6 (ou éventuellement un véhicule principal 7) qui sera décrit plus loin.

Une batterie auxiliaire 1 présente dans une station de charge 5 est considérée comme disponible pour un échange si elle est chargée au-delà d'un seuil prédéterminé S5.

Dans un autre mode de réalisation, le seuil S5 peut être adapté aux besoins des véhicules de la flotte principale, en particulier, si une recharge est indispensable pour un véhicule qui a dû être immobilisé, qu'aucune batterie auxiliaire 1 chargée au-delà du seuil S5 n'est disponible rapidement mais que la tournée de ce véhicule nécessite un niveau de charge inférieur au seuil S5 pour lequel une batterie auxiliaire 1 est identifiée, une dérogation peut être prévue pour l'échange. Suivant l'ampleur de la zone géographique couverte par la flotte principale de véhicules dans son ensemble, mais aussi la répartition des tournées des véhicules de la flotte principale de cette zone géographique, une ou plusieurs stations de charge peuvent être prévues. On notera Nstat le nombre de stations de charge dans la suite.

La répartition spatiale des Nstat stations de charge peut être adaptée en fonction de l'usage de la flotte principale et de la zone géographique couverte.

Le nombre Ncomp peut aussi varier d'une station 5 de charge à une autre, par exemple si la répartition des véhicules n'est pas homogène dans cette zone géographique.

Les horaires de recharge des batteries présentes dans une station donnée peuvent aussi tenir compte, lorsque cela est possible par rapport aux besoins de recharge de la flotte principale, des plages horaires tarifaires du fournisseur d'énergie électrique ou encore de l'origine décarbonée ou non de cette énergie.

Pour le transport des batteries auxiliaires 1, la flotte principale est complétée par une flotte dite auxiliaire (ou flotte de transport). La flotte auxiliaire comprend un nombre Ntransp (supérieur ou égal à 1) de véhicules 6 de transport de batteries auxiliaires 1, dédiés au transport des batteries auxiliaires 1 chargées vers les véhicules de la flotte principale dont les batteries auxiliaires 1 doivent être échangées, ainsi qu'au transport des batteries auxiliaires 1 déchargées depuis les véhicules principaux 7 de la flotte principale vers les stations de charge 5.

La tâche dite « auxiliaire » effectuée par la flotte auxiliaire consiste donc à se déplacer entre des lieux de stationnement de véhicules principaux 7 et/ou un certain nombre de stations de charge 5 pour récupérer, donner ou échanger une ou plusieurs batteries auxiliaires 1.

Le nombre Ntransp est optimisé en fonction de l'usage de la flotte principale, de même que la répartition des véhicules 6 de transport de batteries auxiliaires 1 entre les Nstat stations de charge 5.

Un véhicule de transport 6 donné de la flotte auxiliaire effectue donc sur une période de temps donnée une tournée dite de transport, qui comprend une succession ordonnée d'étapes d'échanges de batteries auxiliaires 1 et une durée d'échange associée à chacune de ces étapes. Optionnellement, la tournée de transport comprend la trajectoire à suivre d'une étape à la suivante. Une étape d'échange de batteries auxiliaires 1 peut avoir pour lieu le lieu d'une étape de stationnement d'un véhicule électrique 7 de la flotte principal ou une station de recharge 5.

Un véhicule de transport 6 peut être associé à une seule station de charge 5 ou circuler entre plusieurs stations de charge 5 différentes.

Un véhicule de transport 6 peut être non motorisé (chariot tiré par un opérateur, vélo équipé d'un moyen de stockage de batteries auxiliaires 1 sur son porte-bagages ou dans une remorque par exemple, etc) ou motorisé.

Dans le cas motorisé, un véhicule de transport 6 de la flotte auxiliaire peut être du même modèle que celui des véhicules de la flotte principale ou d'un autre modèle. Il peut présenter une motorisation thermique, électrique ou hybride.

Les véhicules de transport 6 de la flotte de transport peuvent être tous du même modèle ou de modèles variés.

Les véhicules de transport 6 sont adaptés, par exemple en post-montage, pour le transport des batteries auxiliaires 1. Notamment, ils peuvent contenir un rack configuré pour transporter des batteries auxiliaires 1. Par exemple, un véhicule de transport 6 est une automobile ou une camionnette dont le coffre est équipé d'un rack comprenant Ncomp/transp compartiments 61, éventuellement de dimensions identiques au compartiment 21.

Dans un mode de réalisation particulier, un véhicule de transport 6 comprend un dispositif de communication permettant de transmettre au serveur distant 4 des informations sur le remplissage des Ncomp/transp compartiments et, le cas échéant, le niveau de charge des batteries auxiliaires 1 que chacun de ces compartiments contiennent et de recevoir du serveur distant 4 des informations telles que des consignes d'échanges de batteries auxiliaires 1 et une mise à jour de la tournée de transport à effectuer. Il informe également le serveur distant 4 de la réalisation des tâches d'échange des batteries auxiliaires 1

Le dispositif de communication peut être placé dans le véhicule de transport 6 à demeure, ou de manière transitoire. Dans ce dernier cas, un dispositif électronique de communication portable, tel que le smartphone d'un conducteur de véhicule de transport 6 peut jouer ce rôle.

Chaque véhicule de transport 6 comprend optionnellement un dispositif de géolocalisation, par exemple de type GPS, de sorte que le dispositif de communication qui équipe le véhicule 6 peut transmettre des informations sur la position du véhicule de transport 6 au serveur central distant 4.

Le nombre Ncomp/transp de compartiments 61 peut être adapté à l'usage de la flotte principale et/ou en fonction du nombre Ntransp et du type de véhicules de transport 6.

Le nombre total de batteries auxiliaires 1 mises en oeuvre, noté Nbatt, peut être adapté à l'usage de la flotte principale et/ou en fonction des nombres Ntransp de véhicules de transport 6 et Nprinc de véhicules de la flotte principale.

En réponse aux demandes d'échanges de batteries communiquées au serveur central distant 4 mentionnées précédemment, le processeur dont est équipé le serveur distant 4 met à jour à partir :
- des tournées principales des véhicules 7 de la flotte principale dont les batteries auxiliaires 1 doivent être changées (notamment la position actuelle si le véhicule est immobilisé ou les positions futures si le véhicule est autorisé à poursuivre sa tournée),
- des positions des véhicules de transport 6 de batteries auxiliaires 1 et de leur contenu en batteries auxiliaires 1 chargées et déchargées,
les tournées de transport des véhicules de transport 6, et ces tournées de transport et les instructions d'échange de batteries auxiliaires 1 (nombre, lieu, date, etc.) sont transmises à chacun des véhicules concernés par l'intermédiaire des systèmes de communication.

Pour fixer les idées, admettons que la flotte principale comporte quatre véhicules V1 à V4 principaux 7 dont les états de charge à l'instant t sont :
- V1 : batterie de traction : 30%, batteries auxiliaires : 0%
- V2 : batterie de traction : 50%, batteries auxiliaires : 80%
- V3 : batterie de traction : 100%, batteries auxiliaires : 0%
- V4 : batterie de traction : 90%, batteries auxiliaires : 50%

Admettons que le seuil prédéterminé S1 soit fixé à 80% et le seuil prédéterminé S2 soit fixé à 60 %. A l'instant t, les véhicules V1 et V2, s'ils ne l'étaient pas déjà, sont placés dans l'état « immobilisé » et non disponibles à la réservation.

Les véhicules V3 et V4 sont en revanche disponibles à la réservation.

Les véhicules V1, V3 et V4 envoient tous les trois au serveur l'information que l'échange de leurs batteries auxiliaires est nécessaire.

Le véhicule V2 est indisponible mais sa batterie de traction peut immédiatement être rechargée par les batteries auxiliaires. L'EMS de V2 gère la recharge de la batterie de traction par les batteries auxiliaires et V2 reste indisponible tant que sa batterie de traction ne sera pas supérieure à 80%.

Une tournée d'échange des batteries auxiliaires est calculée passant par les véhicules V1, puis V3 puis V4.

L'opérateur quitte la station de charge avec son véhicule auxiliaire chargé de batteries auxiliaires chargées.

Il se rend au véhicule V1 et échange ses batteries auxiliaires vides par des pleines. L'EMS de V1 gère la recharge de la batterie de traction par les batteries auxiliaires et V1 reste indisponible tant que sa batterie de traction est inférieure à 80%.

Si le véhicule V3 est toujours disponible pour un échange de batteries auxiliaires, il est alors immobilisé pour permettre à l'opérateur de changer ses batteries auxiliaires. Dès l'opération terminée, le véhicule V3 est à nouveau libre d'utilisation (et donc disponible à la location) car sa batterie de traction est chargée à 100%, soit au-delà du seuil prédéterminé S1. A la suite de quoi, si le véhicule V4 est toujours disponible pour un échange de batteries auxiliaires, il est alors immobilisé pour permettre à l'opérateur de changer ses batteries auxiliaires et le véhicule de transport se rend vers le véhicule V4.

Dans un autre mode de réalisation, comme le niveau de charge de la batterie de traction est 100%, le véhicule V3 aurait pu être emprunté avant que l'opérateur ait fini de traiter le véhicule V1. Dans ce cas, il n'aurait alors plus été possible de l'immobiliser jusqu'à sa restitution par le réservataire ou jusqu'à ce que le niveau de charge de la batterie de traction passe en-dessous du seuil S1.

Dans ce cas toujours, la tournée du véhicule de transport aurait été adaptée en temps réel vers un nouveau véhicule V5 à proximité de V3 qui aurait émis une requête d'échange de batteries auxiliaires, ou directement vers le véhicule V4, ou encore vers le véhicule V2 dont la recharge de la batterie de traction, puis l'utilisation ultérieure par un réservataire, aurait fait passer le niveau de charge de la batterie de traction au-dessus du seuil S1 mais celui des batteries auxiliaires en-dessous du seuil S2.

En un point d'échange de batteries auxiliaires avec un véhicule principal 7 (qui est une étape de stationnement de ce véhicule principal), le conducteur du véhicule de transport 6 identifie la ou les batteries auxiliaires 1 chargées qui doivent être transférées au véhicule principal 7 à recharger, ainsi que la ou les batteries auxiliaires 1 déchargées du véhicule principal 7 qu'il doit récupérer. Il procède à l'installation, à la dépose ou à l'échange des batteries concernées.

Une seule ou plusieurs batteries auxiliaires 1 peuvent être transférées. Le transfert peut avoir lieu dans les deux sens (une ou plusieurs batteries déchargées échangées contre une ou plusieurs batteries chargées) ou seulement vers l'un des véhicules parmi les deux véhicules (de transport 6 et principal 7) qui se rencontrent (une ou plusieurs batteries déchargées transférées d'un véhicule principal 7 vers un véhicule de transport 6, ou encore une ou plusieurs batteries chargées transférées d'un véhicule de transport 7 vers un véhicule principal 6). Pour simplifier, ces différents cas de figures ne sont pas détaillés et on parle équivalemment de transfert ou d'échange dans ce document.

Dans un mode de réalisation particulier, le nombre de batteries auxiliaires 1 à échanger est ajusté au moment de l'échange. Par exemple, si la détection de deux batteries auxiliaires déchargées avait déclenché à une date t la génération d'une étape d'échange à une date t' pour un véhicule principal 7 avec un véhicule de transport 6, si à la date de l'échange t', l'évaluation du niveau de charge des batteries auxiliaires 1 conduit à la constatation qu'une troisième batterie auxiliaire 1 s'est déchargée entre les dates t et t' en-dessous d'un seuil prédéterminé, une instruction d'échange peut être générée pour la troisième batterie en plus des deux batteries dont l'échange était initialement prévu.

Un point de rencontre (ou d'échange) d'un véhicule de transport 6 avec un véhicule principal 7 est de préférence un point de parcours connu pour ce véhicule de la flotte principale concerné et un point auquel le stationnement est autorisé. En particulier, lorsque le véhicule principal est placé dans l'état immobilisé, les informations sur la position à laquelle il est (ou éventuellement sera) immobilisé sont transmises au serveur distant, de sorte qu'un véhicule de transport peut aller à sa rencontre. Cette disposition permet de maximiser le temps du conducteur du véhicule principal 7 concerné alloué à la réalisation de la tâche principale.

Pour que les tournées auxiliaires puissent être calculées et optimisées par le processeur du serveur distant, un point de rencontre est une étape de stationnement du véhicule principal prévue. Mais il est possible de prévoir un mode de gestion des urgences dans lequel un véhicule principal 7 est contraint de s'arrêter en un lieu de stationnement autorisé et non prévu et dans lequel la tournée d'un véhicule principal 7 est adaptée pour effectuer un échange de batteries auxiliaires 1 sur ce lieu de stationnement imprévu.

Quoiqu'il en soit, c'est toujours un véhicule de transport 6 qui vient à la rencontre d'un véhicule principal 7 pour effectuer une opération d'échange de batteries auxiliaires (1) et jamais l'inverse. De cette manière, dans le premier mode de réalisation de la flotte principale, la disponibilité d'un véhicule principal 7 pour la tâche principale, à savoir son allocation à un ou plusieurs réservataires est aussi maximale puisque le temps alloué à la recharge du véhicule est minimal. Le temps de recharge est en temps masqué.

Dans ce premier mode de réalisation de la flotte principale, il se peut, suivant l'usage de la flotte principale, que la tâche « principale » ne puisse être anticipée que dans une mesure limitée. Dans ce cas, la tâche auxiliaire de la flotte de transport peut être calculée de manière à maintenir les batteries principales des véhicules principaux 7 à un niveau de charge aussi élevé que possible. En d'autres termes, il est possible de calculer les tournées de transport pour que le rayon d'action de l'ensemble des véhicules principaux 7 de la flotte principale soit le plus élevé possible.

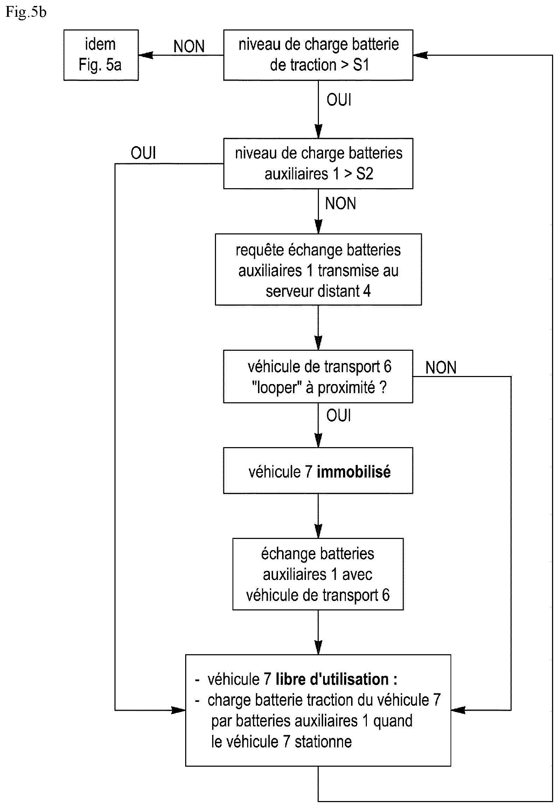

Il est aussi possible, dans ce premier mode de réalisation de la flotte principale, si des récurrences, par exemple des lieux et heures de stationnement de véhicules principaux 7 particulièrement fréquents, sont constatées dans la tâche principale, de définir des tournées de transport tenant compte de ces récurrences et effectuées de manière périodique par un ou plusieurs véhicules de transport 6 de la flotte auxiliaire. Un véhicule de transport 6 peut alors être autorisé en temps réel à effectuer une étape de recharge non prévue initialement dans sa tournée de transport, si cette étape de recharge peut être effectuée sans incidence majeure sur le reste de la tournée de transport. Ce mode de réalisation correspond au logigramme de la Fig. 5b. Une fraction ou la totalité des véhicules de transport 6 dits « loopers » peuvent dans ce cas circuler en permanence en effectuant des tournées principales prédéfinies, dont ils peuvent se détourner ponctuellement lorsqu'ils passent à proximité d'un véhicule de transport immobilisé suite à une requête d'échange de batteries auxiliaires. On comprend que dans ce cas, il n'est pas nécessaire de connaître à l'avance le trajet effectué par un réservataire avec un véhicule principal 7.

Dans le deuxième mode de réalisation de la flotte principale, pour une tournée principale d'un véhicule principal 7 effectuée sur une période de travail continue d'un conducteur de véhicule 7, grâce à la gestion des tournées auxiliaires, le temps alloué à la recharge en énergie du véhicule est minimal et le temps de disponibilité pour la tâche principale est maximal.

En effet, si les étapes d'échanges de batteries auxiliaires peuvent être effectuées par le conducteur du véhicule de transport 6 (qui disposerait par exemple d'un pass d'accès à une pluralité de véhicules principaux 7) en l'absence du conducteur du véhicule principal 7, la durée de la tournée principale n'est pas allongée par ces étapes d'échanges. Sinon, la durée de la tournée principale n'est allongée que de la somme des durées de chacune des étapes d'échange, de l'ordre de la minute, à comparer à la durée d'une recharge classique de la batterie de traction, de l'ordre de quelques heures.

La durée de la tournée principale d'un véhicule électrique principal 7 de la flotte principale peut éventuellement être allongée du fait des opérations de recharge par l'intermédiaire des batteries auxiliaires 1 si la durée de stationnement totale du véhicule principal au cours de cette tournée n'est pas suffisante pour assurer la recharge nécessaire de la batterie de traction à partir d'une ou plusieurs batteries auxiliaires 1. Dans ce cas, certaines durées de stationnement pourront être allongées. Cependant, dans la mesure où la recharge de la batterie de traction à partir d'une ou plusieurs batteries auxiliaires 1 ne nécessite pas que le véhicule principal 7 se déplace -vers une borne de recharge et se fait sur des périodes de stationnement prévues indépendamment de cette recharge, le temps de travail du conducteur du véhicule principal alloué à la réalisation de la tâche principale reste optimisé par rapport à un processus de recharge classique.

Par ailleurs, l'invention permet de centraliser les dispositifs de charge dans des stations de charge dédiées qui peuvent être réparties (et/ou concentrées) dans des lieux stratégiques, notamment pour l'optimisation des tournées de transport, mais qui ne nécessitent pas d'espace sur la voie publique. Tant qu'un véhicule de transport 6 contient une ou plusieurs batteries auxiliaires 1 chargées, il peut être autorisé à poursuivre sa tournée de transport.

Si nécessaire, ou optimal par rapport à sa tournée de transport et à la date de la prochaine étape de recharge prévue, un véhicule de transport 6 peut recevoir l'instruction de faire étape dans une station de charge 5, dans laquelle il échange tout ou partie des batteries auxiliaires 1 déchargées qu'il contient avec des batteries auxiliaires 1 chargées.

De la même façon que pour l'échange entre véhicule principal et véhicule de transport, une seule ou plusieurs batteries auxiliaires 1 peuvent être transférées entre un véhicule de transport 6 et une station de charge 5. Le transfert peut avoir lieu dans les deux sens (une ou plusieurs batteries déchargées échangées contre une ou plusieurs batteries chargées) ou seulement dans un sens (une ou plusieurs batteries déchargées transférées d'un véhicule de transport 6 vers une station de charge 5, ou encore une ou plusieurs batteries chargées transférées d'une station de charge 5 vers un véhicule de transport 6). Pour simplifier, ces différents cas de figures ne sont pas détaillés et on parle équivalemment de transfert ou d'échange dans ce document.

Les tournées de transport des véhicules de transport 6 de batteries auxiliaires 1 peuvent être optimisées suivant des critères variés. Notamment, on peut optimiser la disponibilité des véhicules principaux 7 pour la tâche principale, mais aussi, avec une priorité moindre, la longueur ou la durée du parcours de chaque véhicule de transport 6, ou encore le nombre de véhicules de transport 6 en circulation.

Les critères d'optimisation peuvent inclure des critères de consommation d'énergie électrique et/ou de carburant suivant la motorisation du véhicule de transport.

Le niveau de remplissage des compartiments 51 des différentes stations de charge est aussi pris en compte, par exemple de manière à éviter que certaines stations de charge 5 ne se trouvent, de manière ponctuelle ou chronique, vides de batteries auxiliaires 1 ou au contraire excessivement remplies.

La tournée de chaque véhicule de transport 6 de batteries auxiliaires 1 peut être figée après son départ d'une station de charge 5 et jusqu'à son retour à une station de charge 5 (différente de ou identique à la station de charge 5 de départ) ou bien recalculée en temps réel.

Les tournées principales de chacun des véhicules électriques 7 de la flotte principale peuvent dans un mode de réalisation particulier être actualisées en temps réel. Par exemple, dans le deuxième mode de réalisation de la flotte principale, les tâches à effectuer peuvent être réallouées à des conducteurs différents et/ou réorganisées dans le temps, notamment pour tenir compte d'étapes d'échanges de batteries auxiliaires 1 nécessaires, voire indispensables, pour un ou plusieurs des véhicules 7 de la flotte principale.

Dans un mode de réalisation particulier, la manipulation des batteries auxiliaires 1 dans les stations de charge 5 et/ou vers ou depuis un véhicule de transport 6 et un véhicule principal 7 est effectuée par le conducteur du véhicule.

Dans un mode de réalisation particulier, les conducteurs des véhicules de transport 6 peuvent en outre disposer de moyens d'accès aux compartiments 21 des véhicules principaux, y compris en l'absence du conducteur de ce véhicule.

Par exemple, les conducteurs des véhicules de transport 6 peuvent être équipés d'un pass numérique ou mécanique leur permettant d'accéder aux compartiments 21 d'une pluralité de véhicules principaux 7.

La manipulation des batteries auxiliaires 1 dans les stations de charge 5 et/ou vers ou depuis un véhicule de transport 6 et un véhicule principal 7 peut optionnellement être automatisée.

Dans un mode de réalisation particulier, si les flottes de véhicules principaux et/ou de transport sont constituées de plusieurs types de véhicules, différentes tailles de compartiments 21, 51 et 61 pourront être prévues, ainsi que différents modèles de batteries auxiliaires 1.

Dans un mode de réalisation particulier, le serveur central distant 4 est placé dans l'une des stations de charge 5.Dans un autre mode de réalisation, le serveur central distant 4 est un serveur virtuel privé.

### LISTE DES SIGNES DE RÉFÉRENCE

1 : batterie auxiliaire
11 : bornes de connexion de la batterie auxiliaire 1
12 : indicateur de charge de la batterie auxiliaire 1
13 : poignée de la batterie auxiliaire 1
2 : boîtier de connexion
21 : compartiment pour batterie auxiliaire 1 du boîtier de connexion 2
211 : module d'interface d'alimentation
22 : surface supérieure du boîtier de connexion 2
23 : compartiment du boîtier de connexion 2 comprenant un dispositif de gestion de l'énergie (EMS) 231 et un convertisseur DC/AC ou DC/DC 232
231 : dispositif de gestion de l'énergie (EMS)
232 : convertisseur DC/AC ou DC/DC
24 : grilles d'aération
25 : moyens de communication du boîtier de connexion 2 avec un serveur central distant 4
3 : coffre d'un véhicule de type automobile électrique
4 : serveur central distant
5 : station de charge
51 : compartiment pour batterie auxiliaire 1 de la station de charge 5
52 : moyens de communication de la station de charge 5
53 : dispositif de charge d'une batterie auxiliaire 1
6 : véhicule de transport de batteries auxiliaires 1 de la flotte auxiliaire
61 : compartiment pour batterie auxiliaire du véhicule 6
7 : véhicule électrique de la flotte principale

## Revendications

1. Procédé d'approvisionnement en énergie d'une flotte principale de véhicules électriques dédiée à la réalisation d'une tâche principale, comprenant une pluralité de véhicules principaux (7), chacun desdits véhicules principaux (7) :
- étant équipé d'un moteur électrique, d'une batterie de traction, et d'un système électronique de charge (2) de ladite batterie de traction dudit véhicule principal (7) à partir d'au moins une batterie auxiliaire (1) dont il est équipé de manière amovible,
- effectuant une fraction de ladite tâche principale sous forme d'une tournée principale comprenant au moins deux étapes de stationnement,
le procédé comprenant les étapes :
a. on fournit un dispositif informatisé distant (4) comportant un processeur et un dispositif de communication à distance, une pluralité de batteries auxiliaires (1), au moins un dispositif de charge (53) d'au moins une desdites batteries auxiliaires (1) et une flotte auxiliaire de véhicules comprenant au moins un véhicule de transport (6) de batteries auxiliaires (1) ;
b. on charge au moins une desdites batteries auxiliaires (1) au moyen dudit au moins un dispositif de charge (53) ;
c. on transmet au dispositif informatisé distant (4) des informations comprenant au moins le lieu et la date d'une étape de stationnement prévue de ladite tâche principale,
d. ledit processeur du dispositif informatisé distant (4) calcule une tâche auxiliaire à effectuer par ladite flotte auxiliaire comprenant au moins une action parmi {transmettre à un véhicule principal (7) pendant une étape de stationnement prévue de ce véhicule principal (7) au moins une batterie auxiliaire (1) au moins partiellement chargée, recevoir d'un véhicule principal (7) pendant une étape de stationnement prévue de ce véhicule principal (7) au moins une batterie auxiliaire (1) au moins partiellement déchargée }, et la répartit en une ou plusieurs tournées auxiliaires ;
e. au moins un des véhicules de transport (6) de ladite flotte auxiliaire réalise une desdites tournées auxiliaires.

2. Procédé suivant la revendication 1 **caractérisé en ce que** si à l'étape e, ladite action « transmettre à un véhicule principal (7) au moins une batterie auxiliaire (1) au moins partiellement chargée pendant une étape de stationnement prévue de ce véhicule principal (7) » est effectuée, une étape de recharge de la batterie de traction est effectuée après ladite étape e comprenant : on recharge ladite batterie de traction du véhicule principal (7) au moyen du système électronique de charge (2) de la batterie de traction du véhicule principal (7) à partir d'au moins une batterie auxiliaire (1) au moins partiellement chargée.

3. Procédé suivant la revendication 1 ou la revendication 2 **caractérisé en ce qu'**au cours de l'étape a, on fournit au moins une station de charge (5) équipée d'au moins un dispositif de charge (53) d'au moins une desdites batteries auxiliaires (1).

4. Procédé suivant la revendication 3 **caractérisé en ce qu'**au cours de l'étape a, le processeur dudit dispositif informatisé distant (4) calcule la position d'au moins une station de charge (5) en fonction de ladite tâche principale.

5. Procédé suivant la revendication 3 ou la revendication 4 **caractérisé en ce que** ladite étape a comprend en outre : on équipe au moins une station de charge (5) d'un dispositif permettant de mesurer et de transmettre audit dispositif informatisé distant (4) pour chaque batterie auxiliaire (1) effectivement présente dans ladite station de charge (5) des informations comprenant la localisation et le niveau de charge de ladite batterie auxiliaire (1).

6. Procédé suivant l'une quelconque des revendications 3 à 5 **caractérisé en ce que** ladite tâche auxiliaire calculée à l'étape d comprend en outre au moins une action parmi {déposer dans une station de charge (5) au moins une batterie auxiliaire (1) au moins partiellement déchargée, recevoir dans une station de charge (5) au moins une batterie auxiliaire (1) au moins partiellement chargée}.

7. Procédé suivant l'une quelconque des revendications 1 à 6 **caractérisé en ce qu'**une ou plusieurs desdites étapes a, b, c, d et e sont réitérées dans un ordre quelconque.

8. Procédé suivant l'une quelconque des revendications 1 à 7 **caractérisé en ce que** ladite étape a comprend en outre :
on équipe chacune desdites batteries auxiliaires (1) d'un dispositif permettant de mesurer le niveau de charge de ladite batterie auxiliaire (1).

9. Procédé suivant l'une quelconque des revendications 1 à 8 **caractérisé en ce que** ledit système électronique de recharge (2) de la batterie de traction du véhicule principal (7) comprend un dispositif permettant de transmettre audit dispositif informatisé distant (4) pour chaque batterie auxiliaire (1) effectivement présente dans ledit véhicule principal (7) des informations comprenant la localisation et le niveau de charge de ladite batterie auxiliaire (1).

10. Procédé suivant la revendication 8 et la revendication 5 **caractérisé en ce que** :
- après ladite étape a et avant ladite étape d, il comprend une étape de transmission au cours de laquelle au moins un véhicule principal (7) équipé d'au moins une batterie auxiliaire (1) transmet audit dispositif informatisé distant (4) lesdites informations comprenant la localisation et le niveau de charge de ladite batterie auxiliaire (1) et/ou au moins une station de charge (5) transmet audit dispositif informatisé distant (4) lesdites informations comprenant la localisation et le niveau de charge de ladite batterie auxiliaire (1),
- et à ladite étape d, le processeur dudit dispositif informatisé distant (4) calcule ladite tâche auxiliaire et la répartit en lesdites tournées auxiliaires en fonction desdites informations comprenant la localisation et le niveau de charge de ladite batterie auxiliaire (1).

11. Procédé suivant la revendication 9 ou la revendication 10 **caractérisé en ce que** :
- au cours de ladite étape a, au moins un desdits véhicules principaux (7) et/ou au moins un desdits véhicules de transport (6) est équipé d'un dispositif de géolocalisation, les informations de géolocalisation étant transmises au moyen d'un système de communication à l'au moins un dispositif informatisé distant (4),
- et à ladite étape d, le processeur dudit dispositif informatisé distant (4) utilise en outre lesdites informations de géolocalisation pour calculer et répartir ladite tâche auxiliaire.

12. Procédé suivant la revendication 11 **caractérisé en ce qu'**après l'étape c, et avant l'étape d, il comprend en outre une étape de répartition au cours de laquelle le processeur dudit dispositif informatisé distant (4) calcule ladite tâche principale et la répartit en lesdites tournées principales en fonction desdites informations de géolocalisation ou desdites informations sur la localisation et le niveau de charge d'au moins une batterie auxiliaire (1), et **en ce que** lesdites tournées principales calculées à l'étape de répartition et auxiliaires calculées à l'étape d sont calculées par le processeur pour optimiser le temps passé par lesdits véhicules principaux (7) à effectuer ladite tâche principale.

13. Procédé suivant la revendication 12 **caractérisé en ce que** lesdites tournées principales calculées à l'étape de répartition et auxiliaires calculées à l'étape d sont calculées par le processeur dudit dispositif informatisé distant (4) pour optimiser en outre un ou plusieurs critères parmi {le nombre de véhicules de transport (6) en circulation, la durée totale desdites tournées de transport, la consommation totale des véhicules de transport}.

14. Procédé selon l'une quelconque des revendications 12 et 13 **caractérisé en ce que** lesdites tournées principales calculées à l'étape de répartition, et auxiliaires calculées à l'étape d sont actualisées en temps réel.

15. Flotte de véhicules comprenant :
- une flotte principale de véhicules électriques dédiée à la réalisation d'une tâche principale, comprenant une pluralité de véhicules principaux (7), chacun desdits véhicules principaux (7) étant:
a) équipé d'un moteur électrique, d'une batterie de traction, et d'un système électronique de charge (2) de ladite batterie de traction dudit véhicule principal (7) à partir d'au moins une batterie auxiliaire (1) dont il est équipé de manière réversible,
b) adapté pour effectuer une fraction de ladite tâche principale sous forme d'une tournée principale comprenant au moins deux étapes de stationnement ;
- une pluralité de batteries auxiliaires (1) ;
- au moins un dispositif de charge (53) d'au moins une desdites batteries auxiliaires (1) ;
- une flotte auxiliaire de véhicules comprenant au moins un véhicule de transport (6) de batteries auxiliaires (1), adapté pour effectuer une tâche auxiliaire comprenant au moins une action parmi {transmettre à un véhicule principal (7) pendant une étape de stationnement prévue de ce véhicule principal (7) au moins une batterie auxiliaire (1) au moins partiellement chargée, recevoir d'un véhicule principal (7) pendant une étape de stationnement prévue de ce véhicule principal (7) au moins une batterie auxiliaire (1) au moins partiellement déchargée} ;
- un dispositif informatisé distant (4) :
1. comportant un processeur et un dispositif de communication à distance,
2. recevant des informations comprenant au moins le lieu et la date d'une étape de stationnement prévue de ladite tâche principale,
3. ledit processeur étant adapté pour calculer ladite tâche auxiliaire à partir desdites informations reçues.

16. Système électronique de charge (2) destiné à équiper un véhicule principal (7) du système suivant la revendication 15 **caractérisé en ce qu'**il comprend :
- un ou plusieurs compartiments adaptés pour recevoir chacun une batterie auxiliaire (1),
- les connecteurs électriques et l'électronique adaptés pour charger ladite batterie de traction dudit véhicule principal (7) à partir d'au moins une batterie auxiliaire (1),
- un convertisseur DC/AC ou DC/DC,
- un dispositif adapté pour transmettre à un dispositif informatisé distant (4) pour chaque batterie auxiliaire (1) effectivement présente dans ledit véhicule principal (7) des informations comprenant la localisation et le niveau de charge de ladite batterie auxiliaire (1) pour ladite charge de la batterie de traction à partir d'au moins une batterie auxiliaire (1), le système électronique de charge étant monté sur le véhicule principal (7) de manière réversible ou amovible de manière à permettre à la fois d'adapter un véhicule électrique existant à l'usage de la flotte principale, et de restituer ce véhicule électrique dans son état d'origine,
le système électronique de charge (2) pouvant être monté sur le véhicule principal (7) de manière réversible ou amovible de manière à permettre d'adapter un véhicule électrique existant à l'usage de la flotte principale et/ou de sortir ce véhicule électrique de la flotte principale pour le destiner à un autre usage.

17. Programme d'ordinateur comprenant des instructions de code de programme pour l'exécution de l'étape d du procédé selon la revendication 1 et/ou de l'étape a du procédé selon la revendication 4 et/ou de l'étape de répartition suivant l'une quelconque des revendications 12 à 14 lorsque ledit programme est exécuté sur un ordinateur.
